# EUROPEAN PATENT APPLICATION

(11) **EP 4 625 090 A1**
(43) Date of publication of application: **01.10.2025**
(21) Application number: 24167703.8
(22) Date of filing: 28.03.2024
(51) Int. Cl.: G05D 7/01, F16K 1/00

(54) **TURBINE FEATURE IN A CONTROL VALVE**

(71) Applicant: Pittway Sarl, 1180 Rolle (CH)
(72) Inventor: SVEJNOHA, Petr, 68201 Vy kov (CZ); FADRNY, Petr, 61300 Brno (CZ)
(74) Representative: Murgitroyd & Company

(57) **Abstract**

A pressure independent control valve can include a valve body including a fluid inlet and a fluid outlet. The pressure independent control valve can include a fluid flow path between the fluid inlet and the fluid outlet. The pressure independent control valve can include a pressure differential controller. The pressure independent control valve can include a valve insert. The valve insert can include an orifice and a flow director disposed within the orifice. The flow director can be configured to at least partially block flow of a fluid through the orifice. The flow director can be configured to reduce turbulence in flow of the fluid through the orifice. The valve insert can be configured to receive the fluid from the fluid inlet and output the fluid via the fluid outlet. The pressure independent control valve can have a flowrate of at least 3,000 liters per hour.

## Description

### FIELD

This disclosure relates generally to valves. More particularly, this disclosure relates to pressure independent control valves.

### BACKGROUND

When conventional two-way valves open or close, a pressure change resulting in overflow or underflow can be caused. Pressure independent control valves maintain a required flowrate constant by regulating pressure drop.

### SUMMARY

In some embodiments, a pressure independent control valve includes a valve body. In some embodiments, the valve body includes a fluid inlet and a fluid outlet. In some embodiments, the pressure independent control valve includes a fluid flow path between the fluid inlet and the fluid outlet. In some embodiments, the pressure independent control valve includes a pressure differential controller. In some embodiments, the pressure independent control valve includes a valve insert. In some embodiments, the valve insert includes an orifice and a flow director disposed within the orifice and configured to at least partially block flow of a fluid through the orifice. In some embodiments, the flow director is configured to reduce turbulence in flow of the fluid through the orifice. In some embodiments, the valve insert is configured to receive the fluid from the fluid inlet and output the fluid via the fluid outlet.

In some embodiments, the pressure independent control valve is configured to have a flowrate of at least 3,000 liters per hour.

In some embodiments, the valve insert is disposed within the valve body.

In some embodiments, the pressure independent control valve further includes one or more pressure taps configured to determine a fluid pressure of the fluid passing through the valve body.

In some embodiments, the valve insert is formed of a plastic material.

In some embodiments, the valve insert is formed by an injection molding process or a casting process.

In some embodiments, the valve insert is formed by a 3D printing process.

In some embodiments, the flow director is a turbine.

In some embodiments, the turbine includes at least three blades.

In some embodiments, the turbine blocks an area of the orifice. In some embodiments, the turbine blocks at least 60% of the area of the orifice.

In some embodiments, the turbine blocks less than 90% of the area of the orifice.

In some embodiments, the turbine blocks at least 65% of the area of the orifice.

In some embodiments, the turbine blocks less than 85% of the area of the orifice.

In some embodiments, a system includes a pressure independent control valve includes a valve body. In some embodiments, the valve body includes a fluid inlet and a fluid outlet. In some embodiments, the pressure independent control valve includes a fluid flow path between the fluid inlet and the fluid outlet. In some embodiments, the pressure independent control valve includes a pressure differential controller. In some embodiments, the pressure independent control valve includes a valve insert. In some embodiments, the valve insert includes an orifice and a flow director disposed within the orifice and configured to at least partially block flow of a fluid through the orifice. In some embodiments, the flow director is configured to reduce turbulence in flow of the fluid through the orifice. In some embodiments, the valve insert is configured to receive the fluid from the fluid inlet and output the fluid via the fluid outlet. In some embodiments, a first fluid conduit is connected to the fluid inlet. In some embodiments, a second fluid conduit is connected to the fluid outlet.

In some embodiments, the pressure independent control valve is configured to have a flowrate of at least 3,000 liters per hour.

In some embodiments, the flow director is a turbine.

In some embodiments, the turbine includes at least three blades.

In some embodiments, the turbine blocks an area of the orifice, wherein the turbine blocks at least 60% of the area of the orifice.

In some embodiments, the turbine blocks less than 90% of the area of the orifice.

In some embodiments, a pressure independent control valve includes a valve body. In some embodiments, the valve body includes a fluid inlet and a fluid outlet. In some embodiments, the pressure independent control valve includes a fluid flow path between the fluid inlet and the fluid outlet. In some embodiments, the pressure independent control valve includes a pressure differential controller. In some embodiments, the pressure independent control valve includes a valve insert. In some embodiments, the valve insert includes an orifice and a turbine disposed within the orifice and configured to at least partially block flow of a fluid through the orifice. In some embodiments, the turbine is configured to reduce turbulence in flow of the fluid through the orifice. In some embodiments, the valve insert is configured to receive the fluid from the fluid inlet and output the fluid via the fluid outlet.

In some embodiments, the pressure independent control valve is configured to have a flowrate of at least 3,000 liters per hour.

In some embodiments, the turbine includes at least three blades.

In some embodiments, the turbine blocks an area of the orifice, wherein the turbine blocks from 60% to 90% of the area of the orifice.

### BRIEF DESCRIPTION OF THE DRAWINGS

References are made to the accompanying drawings that form a part of this disclosure and that illustrate embodiments in which the systems and methods described in this Specification can be practiced.
FIG. 1 shows a pressure independent control valve, according to some embodiments.
FIG. 2 shows a cross-sectional view of the pressure independent control valve of FIG. 1, according to some embodiments.
FIG. 3 shows a valve insert for a pressure independent control valve, according to some embodiments.
FIG. 4 shows a portion of a fluid system including a pressure independent control valve, according to some embodiments.

Like reference numbers represent the same or similar parts throughout.

### DETAILED DESCRIPTION

A pressure independent control valve (PICV) can regulate a flowrate of a fluid and keep the flowrate of the fluid output from the PICV constant despite changing pressure conditions in a fluid circuit within which the PICV is installed. A common use for PICVs includes within fluid circuits of a heating, ventilation, and air conditioning (HVAC) system. For example, the PICV can be used in a distribution circuit that circulates liquid media such as, but not limited to, water, glycol, or combinations thereof. PICVs generally include a pressure differential controller to maintain a constant pressure difference, thereby resulting in a constant flowrate of the fluid output regardless of the pressure fluctuations.

In some embodiments, PICVs can maintain a constant flowrate in a range of fluctuating pressures in a fluid system. In some embodiments, a range of pressure fluctuations can be, for example, 0.3-6.0 bar. In some embodiments, the pressure fluctuations can vary beyond the stated range.

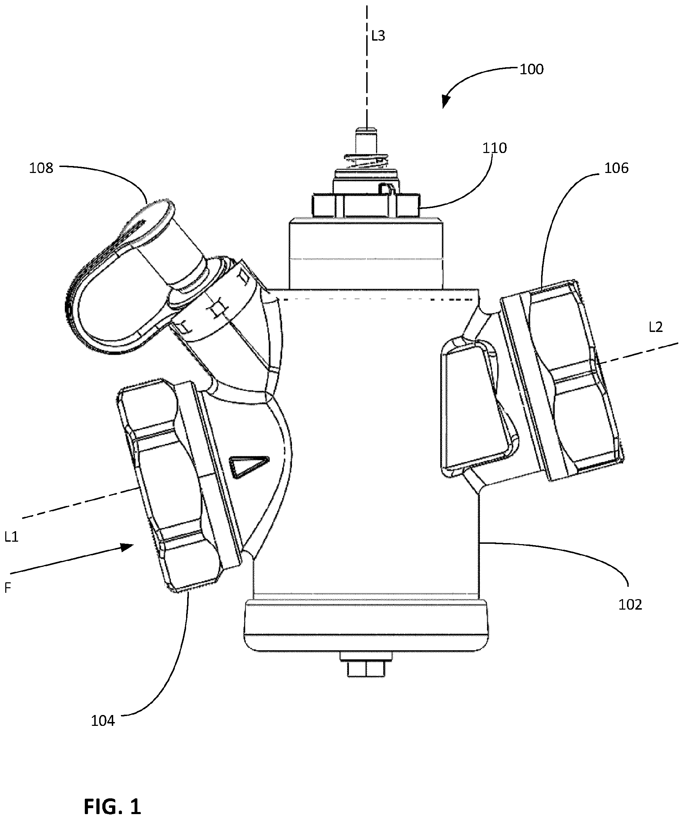

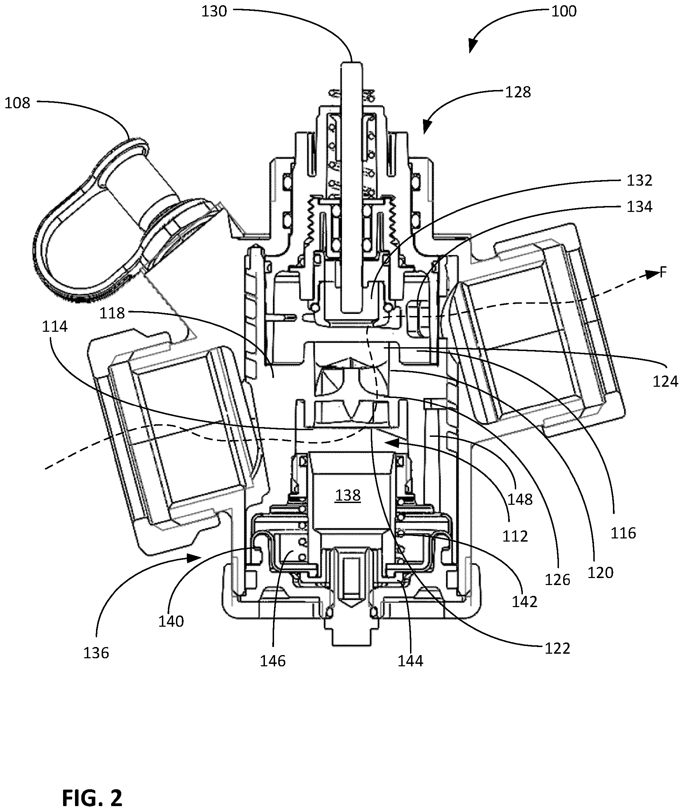

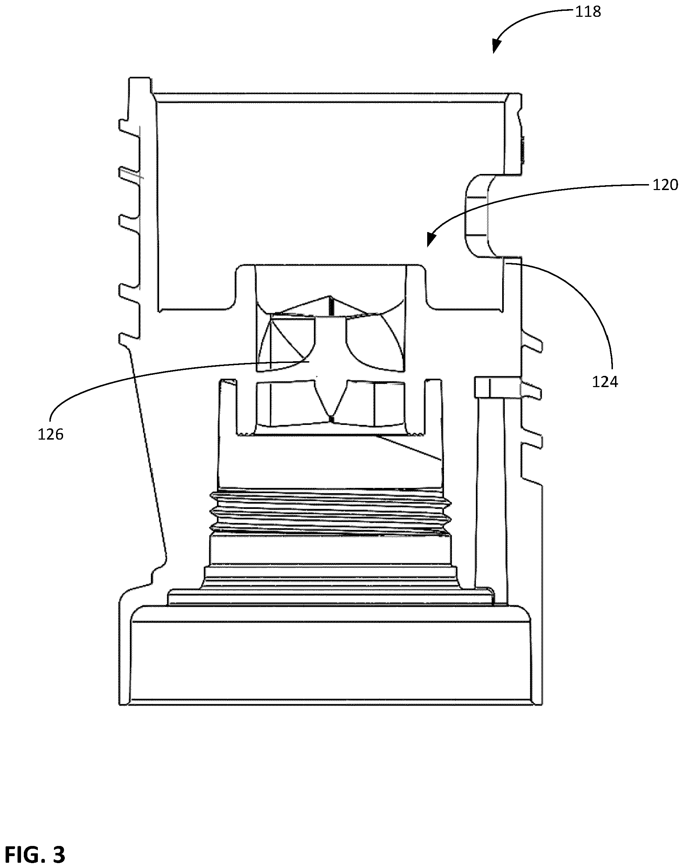

FIG. 1 shows a pressure independent control valve (PICV), PICV 100, according to some embodiments. FIG. 2 shows a cross-sectional view of the PICV 100 of FIG. 1, according to some embodiments. FIG. 3 shows a valve insert for the PICV 100, according to some embodiments. For simplicity of this Specification, unless noted otherwise, FIG. 1, FIG. 2, and FIG. 3 will be referenced collectively.

For simplicity of this disclosure, the pressure independent control valve will be referred to as the PICV 100 throughout this description. The PICV 100 can be used to control a flow of a fluid such as, but not limited to, a liquid (e.g., water or the like). In some embodiments, the PICV 100 can be used to control a flow of a fluid in a system such as, but not limited to, an HVAC system.

The PICV 100 includes a valve body 102. The valve body 102 can be a generally cylindrical or tubular element, according to some embodiments. It is to be appreciated that the shape of the valve body 102 can vary beyond the stated examples within the scope of this disclosure. A size of the valve body 102 can be determined based on, for example, a particular application for the PICV 100 and the corresponding flowrates for the fluid. In some embodiments, the PICV 100 may have a smaller overall size than prior PICVs. In some embodiments, the PICV 100 is configured to have a flowrate of at least 3,000 liters per hour. In some embodiments, the PICV 100 can have a flowrate of 2,700 liters per hour to 3,000 liters per hour. In some embodiments, the PICV 100 can have a flowrate of up to 2,700 liters per hour.

The valve body 102 includes a fluid inlet 104 and a fluid outlet 106. The fluid within the fluid inlet 104 is at an inlet pressure. The fluid within the fluid outlet 106 is at an outlet pressure. In some embodiments, the fluid inlet 104 has a longitudinal axis L1. In some embodiments, the fluid outlet 106 has a longitudinal axis L2. In some embodiments, the longitudinal axis L1 is coaxial with the longitudinal axis L2. As a result, the longitudinal axis L1 of the fluid inlet 104 is coaxially aligned with the longitudinal axis L2 of the fluid outlet 106. In some embodiments, the longitudinal axis L1 and the longitudinal axis L2 correspond to a flow direction of the fluid from the fluid inlet 104 to the fluid outlet 106. In the illustrated embodiment, the flow direction is shown with arrow F. In the illustrated embodiment, the fluid inlet 104 and the fluid outlet 106 are arranged on opposite sides of the valve body 102. Although not shown in the illustrated embodiment, it is to be appreciated that the fluid inlet 104 and the fluid outlet 106 can be connected to fluid conduits of the fluid system in which the PICV 100 is installed.

As shown in FIG. 1, the PICV 100 can include one or more pressure taps 108. The one or more pressure taps 108 can be used to, for example, measure pressures of the fluid in the fluid inlet 104. In some embodiments, the one or more pressure taps 108 can receive a pressure sensor, a pressure test cock, or the like, for measuring the pressures in the fluid inlet 104.

In the illustrated embodiment, the PICV 100 includes a nut 110. The nut 110 can be rotated about a longitudinal axis L3 to adjust a volumetric flowrate setting for the PICV 100. In some embodiments, the nut 110 can be used to adjust a flowrate through the PICV 100 between a maximum flowrate setting and a zero flowrate setting. In some embodiments, the PICV 100 is configured to have a flowrate of at least 3,000 liters per hour. In some embodiments, the PICV 100 can have a flowrate of 2,700 liters per hour to 3,000 liters per hour. In some embodiments, the PICV 100 can have a flowrate of up to 2,700 liters per hour.

The valve body 102 also includes a chamber 112 disposed within the valve body 102 and between the fluid inlet 104 and the fluid outlet 106. The chamber 112 includes the longitudinal axis L3. In some embodiments, the longitudinal axis L3 is not coaxial with the longitudinal axis L1 or L2. In some embodiments, an angle is defined between the longitudinal axis L3 and the longitudinal axis L1. In some embodiments, the angle is offset from 90°. It is to be appreciated that this is an example and in some embodiments, the angle can be 90°. That is, in some embodiments, the longitudinal axis L1 and the longitudinal axis L3 can be perpendicular to each other.

In some embodiments, the chamber 112 can be divided into separate chambers. For example, in the illustrated embodiment, the chamber 112 includes an upstream chamber 114 and a downstream chamber 116. The upstream chamber 114 is configured to fluidly communicate with the fluid inlet 104. The downstream chamber 116 is configured to fluidly communicate with the fluid outlet 106.

In some embodiments, a valve insert 118 is disposed within the valve body 102. In some embodiments, the valve insert 118 can be a separate component from the valve body 102. In some embodiments, the valve insert 118 can have a profile that generally conforms to an inner profile of the valve body 102. In such embodiments, the valve insert 118 can mate with the valve body 102. In some embodiments, the valve insert 118 can function as a liner within the valve body 102. In some embodiments, the valve insert 118 can have a cylindrical or tubular shape, according to some embodiments. It is to be appreciated that these geometries are examples and can vary within the scope of the present disclosure.

In some embodiments, the valve insert 118 includes an orifice 120 that fluidly connects the upstream chamber 114 and the downstream chamber 116. In some embodiments, the valve insert 118 can include an inlet 122 and an outlet 124. The inlet 122 can be fluidly connected to the fluid inlet 104 to receive the fluid and the outlet 124 can be fluidly connected to the fluid outlet 106 to output the fluid. As a result, the fluid flow path can traverse from the inlet 122 through the orifice 120 and out the outlet 124. In some embodiments, an alignment between the outlet 124 and the fluid outlet 106 can control an amount of flow therethrough.

Within the orifice 120 is a flow director 126. Thus, the fluid flow in the direction F is such that fluid flows into the fluid inlet 104, into the upstream chamber 114, through the valve insert 118 and the orifice 120, through the flow director 126, and into the fluid outlet 106, then subsequently discharged from the PICV 100.

In some embodiments, the flow director 126 is turbine shaped. In some embodiments, the flow director 126 includes a turbine that the fluid traverses as it passes through the valve insert 118. In some embodiments, the turbine is fixed. That is, in some embodiments, the turbine provides a circuitous flow path through the valve insert 118, but the flow path is fixed and not adjustable. In some embodiments, a pitch angle of the turbine blades and a number of total blades can be selected to control a flow of the fluid through the PICV 100. In some embodiments, the number of total blades and the pitch angle can be selected based on a size of the PICV 100 and the expected maximum flowrates. In some embodiments, the flow director 126 can be particularly beneficial at higher flowrates. In some embodiments, the turbine blades cannot overlap. That is, the design of the flow director 126 includes consideration that flow must be able to get from the fluid inlet 104 to the fluid outlet 106 through the valve insert 118.

In some embodiments, the flow director 126 is a turbine and includes at least three blades. In some embodiments, the flow director 126 is a turbine and includes at least four blades. In some embodiments, the flow director 126 is a turbine and includes at least five blades. It is to be appreciated that the number of blades is an example and can be greater than five blades.

In some embodiments, an amount of area the flow director 126 occupies within the orifice 120 is selected so that at least 60% of the orifice is closed. In some embodiments, an amount of area the flow director 126 occupies within the orifice 120 is selected so that at least 65% of the orifice is closed. In some embodiments, an amount of area the flow director 126 occupies within the orifice 120 is selected so that at least 70% of the orifice is closed. In some embodiments, an amount of area the flow director 126 occupies within the orifice 120 is selected so that at least 75% of the orifice is closed. In some embodiments, an amount of area the flow director 126 occupies within the orifice 120 is selected so that at least 80% of the orifice is closed. In some embodiments, an amount of area the flow director 126 occupies within the orifice 120 is selected so that at least 85% of the orifice is closed.

In some embodiments, an amount of area the flow director 126 occupies within the orifice 120 is selected so that less than 90% of the orifice is closed. In some embodiments, an amount of area the flow director 126 occupies within the orifice 120 is selected so that less than 85% of the orifice is closed. In some embodiments, an amount of area the flow director 126 occupies within the orifice 120 is selected so that less than 80% of the orifice is closed. In some embodiments, an amount of area the flow director 126 occupies within the orifice 120 is selected so that less than 75% of the orifice is closed. In some embodiments, an amount of area the flow director 126 occupies within the orifice 120 is selected so that less than 70% of the orifice is closed. In some embodiments, an amount of area the flow director 126 occupies within the orifice 120 is selected so that less than 65% of the orifice is closed.

In some embodiments, the flow director 126 can reduce an amount of turbulence in a flow of the fluid within the 120. In some embodiments, reducing the amount of turbulence can improve regulation stability of the PICV 100. In some embodiments, improving the regulation stability of the PICV 100 can increase a volume flow of the fluid capable of passing through the PICV 100.

In some embodiments, the valve insert 118 is formed of a plastic material. In some embodiments, the valve insert 118 can be made by an injection molding process. In some embodiments, the valve insert 118 can be made by a 3D printing process. In some embodiments, the valve insert 118 can be made by a casting process.

In some embodiments, the flow director 126 can reduce an overall size of the PICV 100 compared to prior valves. In some embodiments, the flow director 126 can be designed so that the fluid flowing therethrough leaves without being in a turbulent state. In some embodiments, the flow director 126 causes a twisting in the streamlines of the fluid in the PICV 100. In some embodiments, the twisting streamlines can improve an ability of the fluid to be output from the PICV 100.

A pressure of the fluid in the fluid inlet 104 is P1. A pressure of the fluid within the flow path between fluid inlet 104 and fluid outlet 106 is P2. A pressure of the fluid within the fluid outlet 106 is P3. In some embodiments, the pressure decreases through the valve. Thus, in some embodiments, P1 > P2 > P3.

The PICV 100 includes a flow controller 128 for controlling a volume of fluid, and accordingly, a flowrate, through the PICV 100. In some embodiments, the flow controller 128 is arranged in the downstream chamber 116 and is configured to control a volume of the fluid flowing through the downstream chamber 116 and subsequently out from the fluid outlet 106.

In some embodiments, the flow controller 128 can include a rod 130, a member 132 coupled to a first end of the rod 130. In some embodiments, the rod 130 can be moved linearly along longitudinal axis L3 into and out from the downstream chamber 116 and the orifice 120. The movement of the member 132 relative to the orifice 120 adjusts an amount of fluid able to flow through the orifice 120 to the fluid outlet 106. As a result, the movement of the member 132 can control a flowrate of the fluid through the orifice 120 and the fluid outlet 106. In some embodiments, as the member 132 moves toward the orifice 120, a flowrate of the fluid can decrease. In some embodiments, as the member 132 moves away from the orifice 120, the flowrate of the fluid can increase. In some embodiments, the member 132 can be movable between a fully opened state and a fully closed state. In some embodiments, the member 132 can be movable into intermediate positions between the fully opened state and the fully closed state. The fully opened state corresponds to a maximum flowrate for the PICV 100. The fully closed state corresponds to a zero flow state. In some embodiments, the rod 130 can be linearly moved by rotating the rod 130, applying a pressing force to the rod 130, combinations thereof, or the like.

In some embodiments, in addition to or alternative to the rod 130 and the member 132, the flow controller 128 can include a member 134 disposed adjacent to the fluid outlet 106. In some embodiments, the nut 110 can be used to adjust the member 134. The member 134 can be moved through adjustment of the nut 110 so that the member 134 either blocks or allows fluid flow. For example, the member 134 can be moved between a fully opened and a fully closed position by rotation of the nut 110. In some embodiments, the fully opened state corresponds to a maximum flowrate for the PICV 100. In some embodiments, the fully closed state corresponds to a zero flow state. In some embodiments, the member 134 can be moved to intermediate positions between the fully opened and the fully closed states.

In some embodiments, the rod 130 and the member 134 can be actuated via the nut 110, the rod 130, or a combination thereof.

In some embodiments, a differential pressure is controlled through a pressure differential controller 136. The pressure differential controller 136 is used to control a pressure difference of the fluid to maintain a constant pressure differential across the PICV 100, thereby maintaining a constant flowrate of fluid regardless of any variations in operation (e.g., pressure fluctuations). The pressure differential controller 136 can be configured to control a pressure difference between the fluid pressure P1 within the fluid inlet 104 and the fluid pressure P2 within the fluid flow path. In some embodiments, the pressure differential controller 136 can be used to control the pressure difference between the fluid pressure P2 within the fluid flow path and the fluid pressure P3 of the fluid outlet 106. In the illustrated embodiment, the pressure differential controller 136 is arranged in the upstream fluid flow path and is configured to control the pressure difference between the fluid pressure P2 within the fluid flow path and the fluid pressure P3 of the fluid outlet 106.

In some embodiments, the pressure differential controller 136 includes a piston 138, a diaphragm 140 connected to the piston, and a spring 142 acting on an upper side of the diaphragm 140.

In some embodiments, the piston 138 can be moved linearly in a direction of the longitudinal axis L3 under the actuation of the diaphragm 140 in a direction towards or away from the orifice 120.

In some embodiments, the diaphragm 140 extends between a chamber 144 and a chamber 146. In some embodiments, the chamber 144 is arranged below the diaphragm 140 and the chamber 146 is arranged above the diaphragm 140. In some embodiments, the chamber 144 is in fluid communication with the fluid flow path and so includes fluid from the fluid flow path having the pressure P2. In some embodiments, the piston 138 can be hollow. In some embodiments, the piston 138 can define a fluid channel between the fluid flow path and the chamber 144. In such embodiments, the chamber 144 can be in fluid communication with the fluid flow path via the piston 138. In some embodiments, the chamber 146 can be in fluid communication with the fluid outlet 106. In such embodiments, the chamber 146 can include fluid from the fluid outlet 106 and have the pressure P3. In some embodiments, a fluid channel 148 can extend between the chamber 146 and the fluid outlet 106. In such embodiments, the chamber 146 can be in fluid communication with the fluid outlet 106 via the fluid channel 148.

In some embodiments, when the PICV 100 is in a flow enabled state, an underside of the diaphragm 140 can receive a force exerted by the fluid at the pressure P2 in the chamber 144. In some embodiments, the upper side of the diaphragm 140 can receive a force exerted by the fluid at pressure P3 in the chamber 146 and the force exerted by the spring 142. In some embodiments, an equilibrium between the forces acting on the diaphragm 140 can determine a position of the diaphragm 140. In some embodiments, the position of the diaphragm 140 can determine a position of the piston 138 relative to the orifice 120. In some embodiments, a position of the diaphragm 140 and a position of the piston 138 relative to the orifice 120 can automatically adjust based on any fluctuations of the fluid pressure P1, the fluid pressure P3, or a combination of the fluid pressure P1 and the fluid pressure P3 can modify the position of the piston 138 relative to the orifice 120. In some embodiments, this can result in maintaining a constant pressure differential between the pressure P2 and the pressure P3.

In some embodiments, the flow director 126 can partially decrease the pressure P2, which is transferred to a bottom side of the diaphragm 140. In some embodiments, this can reduce pressure losses at high flow settings. In some embodiments, this can result in a stable regulation of the fluid even at high flowrates.

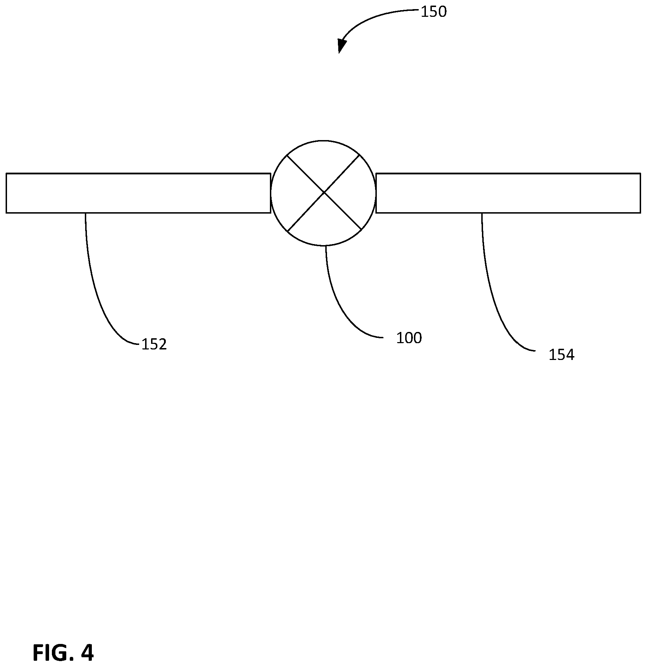

FIG. 4 shows a portion of a fluid system 150 including the PICV 100, according to some embodiments.

In some embodiments, the fluid system 150 includes a first conduit 152 fluidly connected to a fluid inlet 104 of the PICV 100 and a second conduit 154 fluidly connected to a fluid outlet 106 of the PICV 100. In some embodiments, the fluid system 150 can be, for example, a fluid delivery system within an HVAC system or the like. It is to be appreciated that other example systems are possible within the scope of the disclosure and that an HVAC system is an example.

The terminology used herein is intended to describe embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A pressure independent control valve comprising:
a valve body comprising:
a fluid inlet; and
a fluid outlet;
a fluid flow path between the fluid inlet and the fluid outlet;
a pressure differential controller; and
a valve insert, wherein the valve insert comprises:
an orifice; and
a flow director disposed within the orifice,
wherein the flow director is configured to at least partially block flow of a fluid through the orifice,
wherein the flow director is configured to reduce turbulence in flow of the fluid through the orifice;
wherein the valve insert is configured to receive the fluid from the fluid inlet and output the fluid via the fluid outlet,
wherein the pressure independent control valve is configured to have a flowrate of at least 3,000 liters per hour.

2. The pressure independent control valve of claim 1, wherein the valve insert is disposed within the valve body.

3. The pressure independent control valve of claim 1, further comprising one or more pressure taps configured to determine a fluid pressure of the fluid passing through the valve body.

4. The pressure independent control valve of claim 1, wherein the valve insert is formed of a plastic material.

5. The pressure independent control valve of claim 4, wherein the valve insert is formed by an injection molding process or a casting process.

6. The pressure independent control valve of claim 4, wherein the valve insert is formed by a 3D printing process.

7. The pressure independent control valve of claim 1, wherein the flow director is a turbine.

8. The pressure independent control valve of claim 7, wherein the turbine includes at least three blades.

9. The pressure independent control valve of claim 7, wherein the turbine blocks an area of the orifice, wherein the turbine blocks at least 60% of the area of the orifice.

10. The pressure independent control valve of claim 9, wherein the turbine blocks less than 90% of the area of the orifice.

11. The pressure independent control valve of claim 7, wherein the turbine blocks an area of the orifice, wherein the turbine blocks at least 65% of the area of the orifice.

12. The pressure independent control valve of claim 11, wherein the turbine blocks less than 85% of the area of the orifice.

13. A system comprising:
a pressure independent control valve comprising:
a valve body comprising:
a fluid inlet; and
a fluid outlet;
a fluid flow path between the fluid inlet and the fluid outlet;
a pressure differential controller; and
a valve insert, wherein the valve insert comprises:
an orifice; and
a flow director disposed within the orifice,
wherein the flow director is configured to at least partially block flow of a fluid through the orifice,
wherein the flow director is configured to reduce turbulence in flow
of the fluid through the orifice;
wherein the valve insert is configured to receive the fluid from the fluid inlet and output the fluid via the fluid outlet;
a first fluid conduit connected to the fluid inlet; and
a second fluid conduit connected to the fluid outlet;
wherein the pressure independent control valve is configured to have a flowrate of at least 3,000 liters per hour.

14. The system of claim 13, wherein the flow director is a turbine.

15. The system of claim 14, wherein the turbine includes at least three blades.

16. The system of claim 14, wherein the turbine blocks an area of the orifice, wherein the turbine blocks at least 60% of the area of the orifice.

17. The system of claim 16, wherein the turbine blocks less than 90% of the area of the orifice.

18. A pressure independent control valve comprising:
a valve body comprising:
a fluid inlet; and
a fluid outlet;
a fluid flow path between the fluid inlet and the fluid outlet;
a pressure differential controller; and
a valve insert, wherein the valve insert comprises:
an orifice; and
a turbine disposed within the orifice,
wherein the turbine is configured to at least partially block flow of a fluid through the orifice,
wherein the turbine is configured to reduce turbulence in flow of the fluid
through the orifice;
wherein the valve insert is configured to receive the fluid from the fluid inlet and output the fluid via the fluid outlet;
wherein the pressure independent control valve is configured to have a flowrate of at least 3,000 liters per hour.

19. The pressure independent control valve of claim 18, wherein the turbine includes at least three blades.

20. The pressure independent control valve of claim 18, wherein the turbine blocks an area of the orifice, wherein the turbine blocks from 60% to 90% of the area of the orifice.
